# EUROPEAN PATENT SPECIFICATION

(11) **EP 3 299 444 B1**
(45) Date of publication and mention of the grant of the patent: **14.02.2024**
(21) Application number: 17001568.9
(22) Date of filing: 21.09.2017
(51) Int. Cl.: C11C 3/00

(54) **HIGH EFFICIENCY METHOD AND CATALYST FOR THE PRODUCTION OF ALKYL ESTERS FROM FATTY ACIDS WITH ACID CATALYSIS**
HOCHEFFIZIENTES VERFAHREN UND KATALYSATOR ZUR HERSTELLUNG VON ALKYLESTERN AUS FETTSÄUREN MIT SAURER KATALYSE
PROCÉDÉ À HAUTE EFFICACITÉ ET CATALYSEUR POUR LA PRODUCTION D'ESTERS D'ALKYLE À PARTIR D'ACIDES GRAS À L'AIDE D'UNE CATALYSE ACIDE

(30) Priority: 21.09.2016 ES 201600775
(43) Date of publication of application: 28.03.2018
(73) Proprietor: Bio-Oils Huelva, S.L., 21810 Palos de la Frontera, Huelva (ES); Universidad De Malaga, E-29016 Málaga (ES)
(72) Inventor: CONDE LIMÓN, María, 28010 Madrid (ES); SÁNCHEZ OBREGÓN, Virginia, 21810 Palos de la Frontera (Huelva) (ES); ALEMANY ARREBOLA, Luis J., 29071 Malaga (ES); LARRUBIA VARGAS, Maria Angeles, 29590 Campanillas-Màlaga (ES); HERRERA DELGADO, Maria Concepcion, 29590 Campanillas-Màlaga (ES)
(74) Representative: González-Bueno, Pablo

(56) References cited:
- WO-A1-2011/033346
- US-A- 4 652 406
- US-A- 5 525 126
- US-A1- 2009 294 358
- SOLTANI SOROUSH ET AL: "Biodiesel production in the presence of sulfonated mesoporous ZnAl2O4catalyst via esterification of palm fatty acid distillate (PFAD)", FUEL, IPC SCIENCE AND TECHNOLOGY PRESS, GUILDFORD, GB, vol. 178, 23 March 2016 (2016-03-23), pages 253-262, XP029489281, ISSN: 0016-2361, DOI: 10.1016/J.FUEL.2016.03.059
- CHONGKHONG ET AL: "Biodiesel production by esterification of palm fatty acid distillate", BIOMASS AND BIOENERGY, PERGAMON, AMSTERDAM, NL, vol. 31, no. 8, 10 July 2007 (2007-07-10), pages 563-568, XP022146340, ISSN: 0961-9534, DOI: 10.1016/J.BIOMBIOE.2007.03.001

## Description

### FIELD OF THE INVENTION

The present invention relates to an industrializable production process of alkyl esters by simultaneous esterification and trans-esterification, with high efficiency, which is done in an acid medium in subcritical conditions of methanol from various types of low-quality raw materials, and with the possibility of processing both in homogeneous catalysis and heterogeneous catalysis. The process is carried out in a single stage of reaction in isothermal tubular reactors with returns that exceed 98 % of final the conversion in short reaction times.

### BACKGROUND

The conventional transesterification and esterification processes available in the market at this time are described below:
- Transesterification process for obtaining methyl esters based on vegetable oils having a maximum acidity of 0.1% in stirred reactors in series to obtain biodiesel within a specification with basic homogeneous catalysis (Desmet-Ballestra process).
- Esterification process at ambient temperature using sulphuric acid as a catalyst in the homogeneous phase, done in stirred tanks, a 3-4:1 ratio and excess methanol, with esterification times between 4 and 5 hours over raw materials with very high acidity.
- Esterification process at 80 °C, with reflux and continuous contribution of methanol, with sulphuric acid as a catalyst in 2 stages, 2-3 h of of reaction and methanol excesses of 3-4:1.
- Esterification process at 120 °C and 3-5 bar in an autoclave (stirring tank) using methanesulphonic acid as a catalyst with a 3 hour reaction time.
- Simultaneous esterification and transesterification process in supercritical conditions of methanol and without a catalyst, at 120 atm and 200 °C.

There are other patents relating to biodiesel production:
DE19908978 indicates the usefulness of carrying out two reactions in parallel using an acid catalyst. It indicates a temperature not exceeding 85 °C at atmospheric pressure and a residence time of 3 hours.

US2003032826 performs the reaction in a sample time span, but setting the conditions in the Reynolds number, with which the mixture of the reagents is produced.

US2010298586 describes a process for the production of biodiesel through a previous stage of acid esterification and a later stage of basic transesterification, with a water withdrawal stage in between.

CN101362957 describes a process in stirred tanks with up to three stages necessary to achieve a proper conversion. The process involves the continuous separation of glycerin and methanol in excess at each stage, and indicates as conditions, the temperatures of methanol reflux and a residence time of 1 hour. The use of basic and acidic catalysts is indicated.

WO 2008/024716 describes a process that could be done in different types of reactors, appearing in the examples referred to agitated reactors. The process is carried out in 2 or 3 stages, with which the referred results indicated in the table in that document are obtained. The results obtained for the product indicate the need to extend the times to more than 100 minutes of reaction in total.

CN 101508904 A describes a two-stage process with an 85% degree of conversion. Stirred reactors are used in mild conditions and times over 90 min. in a stage and a second stage between 9 and 12 h.

US2008282606 describes a process in stirred reactors that involves several successive stages and which is applied to raw materials with low free fatty acid content. It indicates that it will be necessary to include prior stages of esterification for raw materials of high acidity.

WO 2013/116342 A2 describes a process developed for UCO that includes basic catalysts, acids and even enzyme treatments in stirred reactors. Very long times are described in several stages and include a necessary stage of neutralization for the resulting product.

S. Soltani et. al. have described in "Biodiesel production in the presence of sulfonated mesoporous ZnAl2O4 catalyst via esterification of palm fatty acid distillate (PFAD)" (Fuel, IPC and Technology Press, Guildford GB) a batch process for esterification of a free fatty acids, without transesterification.

S. Chongkhong Tongurai et. al., in "Biodiesel production by esterification of palm fatty acid distillate" (Biomass and Bioenergy, Pergamon, Amsterdam, NL) offer a batch method for esterification of free fatty acids where a second traditional processing with KOH and MeOH is needed for trans-esterification.

US2009294358 discloses an esterification process in two stages, where the first step reaches 95 % of free fatty acid conversion and the second step reaches 99,7%. This process occurs in a fixed bed reactor of 1-10 m working with interchanged resins at a preferred temperature between 80 and 95 °C.

The applicant has no knowledge of a method similar to the present invention that would carry out stages of esterification and transesterification simultaneously to achieve efficiencies above 98 % and enable its industrial implementation in sub critical conditions of methanol, and in the presence of the catalyst. The method has been further optimized allowing it to achieve the same yields higher than 98%, with a greater than 50% reduction of methanol consumption. Furthermore, it has been possible to develop a heterogeneous catalyst of an acid with a functionalised non-reducible mixed acid based with acids derived from the sulphonic acid that allows to obtain very high yields in short times; a fact with no known background described in the bibliography.

### BRIEF EXPLANATION OF THE INVENTION

The invention consists in a method for the production of biodiesel according to the claims.

The new acid esterification process allows obtaining alkyl esters by simultaneous esterification and transesterification, obtaining very high levels of conversion in sub-critical conditions for the methanol and in a tubular reactor in laminar and in continuous regime. 100% of the output currents are recovered and the process can be adapted to heterogeneous catalysis, by using a new catalyst with an acidic character having a base of functionalized non-reducible mixed oxide derived from sulphonic acid that enables obtaining very high yields in short times.

The transesterification has very slow kinetics, limited by the transfer of the material, for which the reaction takes place at a temperature and pressure that ensures the fat and methanol are dissolved in the liquid phase. In this way, a very fast acid transesterification is obtained. This pressure and temperature must be sufficient for maintaining the methanol in a liquid state, which can be easily determined with a diagram of the methanol phases, available in scientific literature.

On the other hand, esterifications have fast kinetics but are limited by the balance. In order to achieve high conversions, <1% of free fatty acids (FFA) in a single stage, high excesses of methanol between 12:1 and 15:1 of molar excess over the stoichiometric ratio are used. This method has been optimized in way enabling it to reach the same yields in conversion of the products, but with a very significant reduction in methanol consumption. Two stages are used for this optimized method, between 4:1 and 6:1 followed by 30-80:1. It is understood to be molar excess over the stoichiometric ratio when the amount present is a number times the stoichiometric amount.

The simultaneous esterification and trans-esterification processing of the invention allows the transformation into alkyl esters of short-chain from various types of fats having high acidity, including low quality raw materials with a high heterogeneity and elevated triglyceride content and impurities. In this patent document, "short chain alkyl ester" will be considered non-cycled linear or branched alkyl esters, with chains of ten to twenty-four carbon atoms.

The development of a heterogeneous catalysis has been carried out, with acidic character having a base of functionalized non-reducible mixed oxide derived from sulphonic acid that enables obtaining very high yields in short times. Furthermore, the intention is to protect the optimized process developed by the applicant, with which the same conversion is obtained: greater than 98%, with a reduction of up to 50% in methanol and the resulting reduction of operating costs and increase in the flow rates of the treatment of raw materials.

The system used in the invention is a continuous tubular system in both horizontal and vertical configuration, insulated and with initial mixers that enable adapting the process to heterogeneous or homogeneous catalysis. The vertical configuration presents certain advantages with respect to the horizontal, for which reason this configuration is preferred.

The method has been optimized to obtain the same level of conversion with a 50% reduction in methanol consumption. Two tubular reactors in series are used in this scenario, and a process is carried out in two stages, in which the high molar excess is applied when the amount of free fatty acids is already very low. The produced alkyl esters have sufficient quality to be sold (alone or in mixtures) for obtaining a product that meets the European specifications laid down in each case.

The process of the invention obtains a suitable product for use as biodiesel with virtually complete conversions in reduced times. Depending upon the raw material used it is established the necessary dosage of the reagents and reaction times that allow obtaining conversions of the two virtually complete reactions. This high conversion prevents the neutralization of the resulting product from being necessary, and so avoids the cost and the management of the inherent losses in this treatment. Likewise, the conditions of the process result in a minimum sulphonation of the carbon chains, except in the case of oleins with double bonds; they result partially sulphonated.

The interval of free acidity of the raw materials is very broad, as its main competitive advantage is raw materials with high content between 50-100% of free acidity expressed as oleic acid. The reaction times with homogeneous catalysis are short, generally less than 1 h, which avoids the degradation of the raw materials due to action of the catalyst in temperature conditions below 132°C at the reactor's inlet temperature. If the reaction accelerates at a higher temperature, the undesirable secondary reactions are favoured as production of dimethyl ether by dehydration of the methanol and sulphonation of double bonds, for which choosing the optimal conditions depends on the raw material. The preferred pressure is less than 13 bar (g) and molar excesses of methanol between 12-18:1 molar excess over the stoichiometric ratio are proposed in a single step, preferably between 12-15:1 and in the optimized process in two stages, between 4-6:1 in the first stage, followed by 30-80:1 in the second, preferably 30-40:1, achieving the same results with a 50% reduction in methanol consumption.

It is possible to use acid type homogeneous catalysts, both mineral and organic, from the hydrochloric acid or sulphuric acids, alkyl sulphates types with low water contents, so as to avoid secondary reactions in the process, like the hydrolysis of the final product.

In addition to the transformation reaction, the method described in the invention includes the management in successive stages of the currents generated in the process, practically including the total recovery of the surplus methanol from the reaction, and separation for the use of the aqueous phases with glycerol. In addition, a method has been developed for the removal of the salts formed in this current, so that the product can be revalued in sewage treatment plants, thereby reducing the environmental impact of the process.

The high efficiency method for the production of alkyl esters from fatty acids by acid catalysis, for which protection is sought, is produced in a vertically positioned isothermal tubular reactor, with liquid methanol and fat with up to 100% free fatty acids and less than 1% moisture; residence time between 15 and 120 minutes, preferably between 15 and 70 minutes, and with a molar excess of methanol/ fat over the stoichiometric ratio in reactions in a stage of 12-18: 1, preferably 12-15 :1. Protecting the optimized process starting from the beginning is also sought, which enables obtaining a product of the same quality but with up to a 50 % reduction in the amount of methanol consumed. This enables processing the same raw materials in two stages of reaction, in times between 30 and 40 min with excess molars for the first of 4-6:1, and for the second of 30-80:1, preferably 30-40:1.

The temperature at the inlet of the reactor in both methods must be between 90-132° C, preferably about 125° C, with a preferred pressure less than 13 bar(g).

The fatty acids can be selected between raw vegetable oils or free fatty acids from refining oil or low quality oily raw materials: with impurities and high variability of free fatty acids. A higher quality raw material can be used, however the advantages of the invention would stand out less.

If the catalyst is homogeneous, preferably it will be present in a percentage between 1 and 5% by weight with respect to the fatty acids. Two stages are carried out in the optimized method, where preferably the percentage by weight of the catalyst is 1-2% in the first stage.

A line of heterogenous catalysts have been developed with a functionalized non-reducible mixed oxygen base derived from sulphonic acid that enables obtaining very high yields in short times; which implies a differentiating fact added to the invention, with regard to the previously described processes. As corresponds to a heterogeneous catalyst, the sulphonic groups should be accessible and not leachable.

In the proposed production method, and also the treatment method in other similar methods of homogeneous acid catalysis with excess methanol, it is proposed to separate the product of the reaction in a light phase with water, glycerin and the excess methanol (more than 50% by weight), and a heavy phase comprising the produced biodiesel. A pre-recovery of the methanol is done in a decompression stage of the products at the outlet of the reactor. The light phase undergoes a partial recovery of the methanol up to a concentration between 33-50% by weight, preferably between 33-45%. After said partial methanol recovery, the present catalyst can be neutralized during the light phase before recovering the remaining excess methanol.

In the present invention, all of the methanol introduced in the process is recovered and re-introduced again in the process. A salt elimination treatment is included for the effluent obtained that enables its revaluation for applications in wastewater treatment plants, with the consequent competitive advantage from the economic and environmental point of view, since the method generates less waste.

### DESCRIPTION OF THE SCHEMES

For a better understanding of the invention, the following is included:

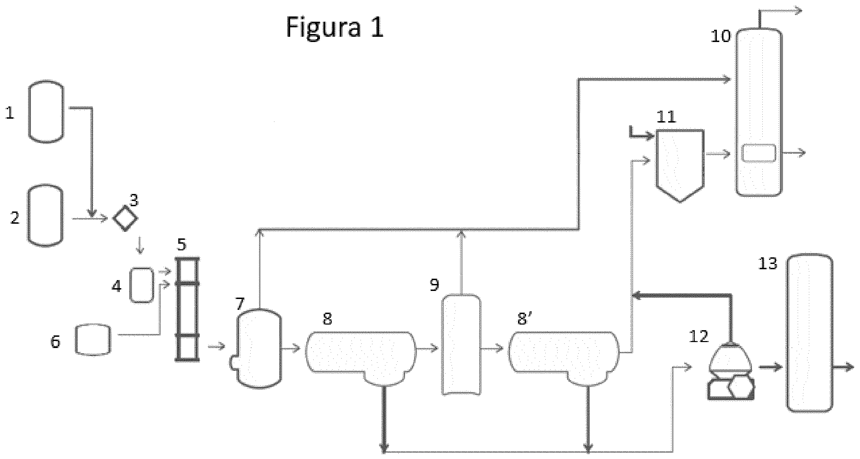

Figure 1: has a schematic example of the method with which the invention is to be implemented.

### FORMS OF EMBODIMENTS OF THE INVENTION

Next, it goes on to briefly describe a form of embodiment of the invention applied to biodiesel production, as in this illustrative but not limited example.

As can be seen in Figure 1, both the fatty acids and the methanol are kept in separate auxiliary deposits (1,2), from where they are pumped to the plant to start the biodiesel production method of the invention. This begins with a first stage in a drying system (3) of the fatty acids, to reduce its moisture. This way improves performance in the esterification reaction.

Next a preheating stage is carried out in a heat exchanger (4), preferably by recovering the heat from other phases of the method. If necessary, it can be completed with other equipment that provides steam for the heat exchange.

The reaction mixture enters the isothermal reactor (5) which must be a tubular type and preferably set up in a vertical position. The preferred reactor will be designed in two tubular fragments that will be able to work in series or in parallel, opening up many operating possibilities that are included in the present invention. If the catalyst is heterogeneous, it will have the shape of pellets or similar at the inlet of the reactor (5), for example a basket. If it is homogeneous, it will be added to the mixture right before entering the reactor (5) from its own reservoir (6).

The residence time in the reactor (5) may vary by increasing the flow rate or by lateral outlets (not represented). In this way, it can be treated from raw materials with nearly 100 % free acidity, having very short residence times, up to raw materials having a content of around 50 % free acidity, and maximum residence times that can be reduced to 70 minutes. The method has been optimized to be able to perform the transformation with the same yields, and in the same total reaction time, but with a 50% reduction of methanol consumption. This optimized method will be carried out in two stages. The particular configuration of the flow rate at any given moment will be determined by the characteristics of the drainage of the fatty acids and catalyst used.

In the optimized process, the reaction is going to occur in two stages: a first stage will be carried out with very low molar excess of methanol, and with the partially reacted material being redirected to the second reactor when it has less than 5% FFA. The residence time of the first reaction stage will be experimentally determined depending on the molar excess of methanol, without exceeding 40 minutes under any circumstance. The percentage of glycerides, sulphur content or fatty acid methyl esters (FAME) in the mixture has not been found limiting. The product has reached a virtually complete conversion after the second reaction stage.

The final product obtained in both methods will be decompressed in a reactor at atmospheric pressure or flash reactor (7) which will enable recovering about 10-20% of the excess methanol.

The reaction product is separated into two stages in one or more separators (8), for example decanters:
- Alkyl esters, which are washed and dried to be stored.
- Acidic water, which is mostly methanol with the water and glycerin produced in the reaction, the acid catalyst in the case of homogeneous catalysis, and part of the fat that has dissolved.

In the existing methods, the acidic water that accompanies the alkyl esters to the outlet of the reaction is neutralized with a base and introduced directly into the methanol recovery column. The fat in the acidic waters makes the recovery processes much more difficult, given that it can lead to oxidation problems or enable soap formation. However, it has been found that removing the methanol, for example by evaporation, up to a concentration between 33-50% by weight, with a preferred range of 33-45%, all the dissolved fat can be separated by decanting or centrifugal separation to avoid the whole problem of oxidation and subsequent soap formation. For this reason, another innovation of the present invention is that the acidic water can directly go through a partial methanol evaporation in an evaporator (9) until the reaching the necessary methanol concentration that enables all the dissolved fat to insolubilize. Typically 20-30% of the excess methanol is recovered in this evaporator (9). It is recovered in that way after a second separation in a second separator (8'), a heavy phase of alkyl esters that can be returned to the process at the first separator (8) and, additionally, prevent the formation of soaps and greasy solids that enormously complicate the operation and reduce the output of the methanol recovery column (10) that recovers the rest of methanol (generally more than 99.5% of the excess).

In the depicted embodiment, and before passing the entrance into the methanol recovery column (10), the acidic waters without fat are neutralized with sodium hydroxide, for example, in a small reactor (11), generating a precipitate of salts, which is separated by means of a solids separator or a filter, which allows the recovery of the resulting effluent, which is another competitive advantage of the method for which protection is sought. This stage transforms what could result in residue from the process, into a raw material that can be reused with high efficiency in the treatment of wastewater, thereby reducing the environmental impact of the process.

If the planned application of the glycerol lyes allows the presence of sulfate salts, the process of separation of the precipitated salt can be skipped, because in the absence of methanol the sulfate is soluble in the water-glycerin mixture.

The phase that contains the alkyl ester goes through a purification process in parallel that includes a first stage of washing and centrifugation in a conventional dish centrifuge (12). As a washing stream, a small percentage of the water obtained from the bottom of the methanol recovery column (10) and a clean water supply can be recycled. To complete the method, a final drying equipment (13) is included to reduce the amount of water present in the final product.

The dosage of the reagents and reaction times that allow obtaining conversions of the two virtually complete reactions are established depending on the raw material used. Next, the possible intervals in the main process parameters are specified according to the conditions that will be covered by the present invention, without the invention being restricted only to these conditions:
- The input temperature to the reactor (5) must be within a range of 90° C to 132° C, and preferably about 125° C.
- The pressure will depend on the temperature, which generally is less than 13 bar(g). In any event, the limiting factor of the temperature and pressure is that the methanol is in liquid phase.
- When a homogeneous catalyst is introduced (generally sulphuric acid), preferably between 1 and 5% in reactions in a stage, 2.5% by weight with respect to the fat is preferred. For the optimized method, which can be carried out in two reaction stages, the first step is set at 1-2% and the second maintains a range between 1 and 7%, preferably between 1 and 5%. It is also possible to use other mineral-type acid catalysts in a homogeneous phase, such as hydrochloric acid or organic acids such as alkyl sulphonates.

The residence time ranges between 15 min and 120 min, or even lower than 70 min.
- The molar excess of methanol / fat over the stoichiometric ratio is variable, with the reactions being in a stage at 12-18:1 and preferably between 12-15:1. However, in the optimized two-stage method, the first could have an excess of methanol molar between 4-6:1, followed by 30-80:1 in the second stage, preferably 30-40:1.
- The conversion yields for both reactions in the final product obtained are the highest known by the applicant to date, exceeding 98% in the shortest residence times compared to those used in other similar processes, and with non-stirred isothermal tubular reactors.

It is essential that the tubular reactor (5) has efficient heat exchangers at the input and good insulation to ensure that the temperature conditions are maintained along its entire length to ensure the necessary high conversions.

### Example 1

A constant flow rate of 0.56 I/h fatty acids, is introduced into a vertical tubular reactor with an amount of free fatty acids between 83,31-85% and 15.04% of triglycerides at 0.05% moisture, with a methanol flow rate that corresponds to a molar excess with respect to the stoichiometric ratio of 15:1, and a percentage of H₂SO₄ at 98% of the 2.5% by weight with respect to the fat introduced, which is pre-heated up to 127 °C with a pressure of 10.5 bar(g). After 60 min. of reaction, and after decanting, the product is washed with excess water at 80 °C, and dries in 30 min at 105 °C. The free fatty acids remaining from the heavy phase undergo a volumetric analysis with soda solution, EN 14104 method, and it is noted that the free fatty acids in the mixture have been reduced to 0.77% and the triglycerides up to 0.083%, using high temperature gaseous chromatography (EN 14105)

### Example 2

A constant flow rate of 0.573 kg/h of a fatty acids mixture with used fried oil, resulting in the feeding in the reactor having 50% free fatty acids and 48.4% triglycerides, and a 0.1% moisture with a methanol flow rate corresponding to a molar excess with respect to the stoichiometric ratio of 12:1, and a percentage of H₂SO₄ at 98% of the 2.5% by weight with respect to the fat introduced, which is pre-heated in a tubular reactor up to 124.9 °C, at a pressure of 10.5 bar(g). After 70 min of reaction, followed by 3 h of gravity decantation, the product is washed with excess water at 80 °C, and dries in 30 min at 105 °C. The fatty acids remaining from the heavy phase undergo a volumetric analysis with soda solution, EN 14104 method, and it is noted that the free fatty acids in the mixture have been reduced to an average of 0.83% and the triglycerides up to 0.746%, using high temperature gaseous chromatography, EN 14105.

### Example 3

A constant flow rate of 2.249 kg/h fatty acids, is placed in a vertical tubular reactor with an amount of free fatty acids between 93.3% and 4.44% of triglycerides at 0.18% moisture, with a methanol flow rate that corresponds to a molar excess with respect to the stoichiometric ratio of 15:1, and 3.5% of H₂SO₄ up to 98% by weight with respect to the fat introduced, which is pre-heated up to 130°C at a pressure of 10.5 bar(g). After 15 min of reaction, and after a decanting stage, the product is washed with excess water at 80 °C, and dries in 30 min at 105 °C. The fatty acids remaining from the heavy phase undergo a volumetric analysis with soda solution, EN 14104 method, and it is noted that the free fatty acids in the mixture have been reduced to 0.79% and the triglycerides up to an average of 0.6745%, using high temperature gaseous chromatography, EN 14105.

### Example 4

In the process optimized by the applicant, a vertical tubular reactor has a constant flow rate of 0.94 kg/h inserted with free fatty acids exceeding 93.3% and 4.44% of triglycerides and a moisture of 0.18%. In a first stage, a methanol flow rate is fed corresponding to a molar excess with respect to the stoichiometric ratio of 6:1, and a percentage of H₂SO₄ to 98% of the 1.5% by weight with respect to the fat introduced, which is preheated to 126.4 °C, at a pressure of 10.5 bar (g). After approximately 40 minutes of reaction and after a decanting stage, the product feeds a second state. The free fatty acids remaining from the heavy phase undergo a volumetric analysis with soda solution, EN 14104 method, and it is noted that the free fatty acids in the mixture have been reduced to 2.5% and the triglycerides up to an average of 0.4975%, using high temperature gaseous chromatography, EN 14105. This fat is introduced into the tubular reactor at a flow rate of 1,416 kg/h, for a second reaction stage, with a methanol flow rate corresponding to a molar excess with respect to the stoichiometric ratio of 30:1, considering only the unconverted free acid in the first stage. A flow rate is also added corresponding to 1% by weight of the re-introduced fat of sulphuric acid H₂SO₄ at 98%. The temperature of the feed to the reactor is 127.9 °C for the second stage, with a final result of 0.81% free acidity and 0.085% total triglycerides in less than 1 hour of reaction time.

### Example 5

A vertical tubular reactor inserts a constant flow rate at 0.6 kg/h of free fatty acids exceeding 93.3% (weight), and 4.44% of triglycerides and a moisture of 0.18%. In a first stage a flow of methanol is fed in, which corresponds to a molar excess with respect to the stoichiometric ratio of 15:1, and a spatial time of 10 h⁻¹. The catalyst is a non-reducible mixed oxide (alumina or carbonaceous support), functionalized with acids derived from sulphonic acid (identification: SO₃-Al₂O₃; SO₃-C; in an equivalent proportion to S, accessible and not leachable to the employee in the homogeneous catalytic process with a content expressed in acidity of 5 meq g⁻¹ in supported weight). The mixture entering the reactor is heated up to 126.4 °C, at a pressure of 10.5 bar(g). After approximately 60 minutes of reaction and a decanting stage, the free fatty acids remaining from the heavy phase are analysed by titration with soda solution, a method in EN 14104, and it is noted that the free fatty acids present in the mixture have been reduced up to 26%, on average.

## Claims

1. High efficiency method for the production of alkyl esters from fatty acids by acid catalysis, **characterized in that** esterification and trans-esterification are produced simultaneously in a continuous process and **in that** it is produced during a single stage in an isothermal tubular reactor (5), preferably in a vertical position, with liquid methanol and from 50% fat to 100% of free fatty acids having less than 1% moisture, residence time between 15 and 120 minutes, preferably between 15 and 70 minutes, and with a molar excess of methanol/ fat over the stoichiometric ratio of 12-18: 1, preferably 12-15 :1 and **in that** the inlet temperature of the first reactor (5) is between 90 °C and 132 °C.

2. Method for the production of alkyl esters from fatty acids with acid catalysis, **characterized in that** esterification and trans-esterification are produced simultaneously and **in that** it is produced in two stages, each one in an isothermal tubular reactor (5), preferably in a vertical position, with liquid methanol and a fat content from 50% to 100 % of free of fatty acids and less than 1% moisture; residence time between 15 and 120 minutes, preferably between 15 and 70 minutes, and with a molar excess of methanol/ fat over the stoichiometric ratio of 4-6:1 in the first stage, and 30-80:1, preferably 30-40:1, in the second stage and **in that** the inlet temperature of both stages is between 90 °C and 132 °C.

3. Method according to claim 1 or 2, **characterized in that** the inlet temperature of the first reactor (5) is about 125 °C.

4. Method according to claim 1 or 2, **characterized in that** the fats are selected from among raw vegetable oils or free fatty acids proceeding from the refining of oil or very low quality oily raw materials and **in that** the fats could have from 50% to 100 % free fatty acids.

5. Method according to claim 1, **characterized in that** its catalyst is homogeneous, and present in a percentage by weight between 1% and 5 % by weight with respect to the fat.

6. Method according to claim 1 or 2, **characterized in that** the percentage by weight of the homogeneous catalyst is 1%-2% by weight with respect of the fat in the first stage and between 1%-7% in the second stage, preferably between 1% and 5%.

7. Method according to claim 1 or 2, **characterized in that** it comprises a heterogeneous catalyst, having an acidic character, with a mixed non-reducible oxide base derived from sulphonic acid, to catalyze both esterification and trans-esterification.

8. Method according to claim 1 or 2, **characterized in that** a prior methanol recovery is produced in a decompression phase of the output products of the reactor (5).

9. Method according to claim 8, **characterized in that** the reaction product is separated during a light phase with water, glycerin, and the excess methanol and a heavy phase, and where the light phase undergoes a partial recovery of the methanol until obtaining a concentration between 33%-50% by weight, preferably between 33%-45%, which insolubilizes the dissolved fat, and the dissolved fat is separated by decanting or centrifugal separation.

10. Method according to claim 8, **characterized in that**, it has a homogeneous catalyst, in which after the partial recovery of the methanol the light phase is neutralized with a base before the recovery of the rest of the excess methanol.

## Patentansprüche

1. Hocheffizientes Verfahren zur Herstellung von Alkylestern aus Fettsäuren durch Säurekatalyse, **dadurch gekennzeichnet, dass** die Veresterung und die Umesterung gleichzeitig in einem kontinuierlichen Prozess durchgeführt werden und dass es in einer einzigen Stufe in einem isothermen Rohrreaktor (5), vorzugsweise in vertikaler Position, mit flüssigem Methanol und 50 % Fett bis 100 % freien Fettsäuren mit weniger als 1 % Feuchtigkeit, einer Verweilzeit zwischen 15 und 120 Minuten, vorzugsweise zwischen 15 und 70 Minuten, und mit einem molaren Überschuss von Methanol/Fett über das stöchiometrische Verhältnis von 12-18: 1, vorzugsweise 12-15 :1 und dadurch, dass die Eingangstemperatur des ersten Reaktors (5) zwischen 90 °C und 132 °C liegt.

2. Verfahren zur Herstellung von Alkylestern aus Fettsäuren mit Säurekatalyse, **dadurch gekennzeichnet, dass** die Veresterung und die Umesterung gleichzeitig erfolgen und dass es in zwei Stufen, jeweils in einem isothermen Rohrreaktor (5), durchgeführt wird, vorzugsweise in vertikaler Position, mit flüssigem Methanol und einem Fettgehalt von 50 % bis 100 % an freien Fettsäuren und weniger als 1 % Feuchtigkeit; Verweilzeit zwischen 15 und 120 Minuten, vorzugsweise zwischen 15 und 70 Minuten, und mit einem molaren Überschuss von Methanol/Fett über das stöchiometrische Verhältnis von 4-6: 1 in der ersten Stufe und 30-80: 1, vorzugsweise 30-40: 1, in der zweiten Stufe und dadurch, dass die Eingangstemperatur beider Stufen zwischen 90 °C und 132 °C liegt.

3. Verfahren nach Anspruch 1 oder 2, **dadurch gekennzeichnet, dass** die Einlasstemperatur des ersten Reaktors (5) etwa 125 °C beträgt.

4. Verfahren nach Anspruch 1 oder 2, **dadurch gekennzeichnet, dass** die Fette aus rohen Pflanzenölen oder freien Fettsäuren aus der Erdölraffination oder aus öligen Rohstoffen von sehr geringer Qualität ausgewählt werden und dass die Fette 50 % bis 100 % freie Fettsäuren aufweisen können.

5. Verfahren nach Anspruch 1, **dadurch gekennzeichnet, dass** sein Katalysator homogen ist und in einem Gewichtsprozentsatz zwischen 1 und 5 Gew.-%, bezogen auf das Fett, vorliegt.

6. Verfahren nach Anspruch 1 oder 2, **dadurch gekennzeichnet, dass** der Gewichtsprozentsatz des homogenen Katalysators im ersten Schritt 1 bis 2 Gew.-%, bezogen auf das Fett, und im zweiten Schritt 1 bis 7 %, vorzugsweise 1 bis 5 %, beträgt.

7. Verfahren nach Anspruch 1 oder 2, **dadurch gekennzeichnet, dass** es einen heterogenen Katalysator mit Säurecharakter mit einer nicht reduzierbaren Mischoxidbase, die von Sulfonsäure abgeleitet ist, umfasst, um sowohl die Veresterung als auch die Umesterung zu katalysieren.

8. Verfahren nach Anspruch 1 oder 2, **dadurch gekennzeichnet, dass** eine vorherige Gewinnung von Methanol in einer Phase der Dekompression der Austrittsprodukte des Reaktors (5) erzeugt wird

9. Verfahren nach Anspruch 8, **dadurch gekennzeichnet, dass** das Reaktionsprodukt in eine leichte Phase mit überschüssigem Wasser, Glycerin und Methanol und eine schwere Phase getrennt wird, und wobei die leichte Phase einer teilweisen Rückgewinnung des Methanols unterzogen wird, bis eine Konzentration zwischen 33%-50 Gew.-%, vorzugsweise zwischen 33%-45 Gew.-%, erreicht ist, die das gelöste Fett unlöslich macht, und das gelöste Fett durch Dekantieren abgetrennt oder durch Zentrifugieren abgetrennt wird.

10. Verfahren nach Anspruch 8, **dadurch gekennzeichnet, dass** es sich um einen homogenen Katalysator handelt, bei dem nach der teilweisen Gewinnung von Methanol die leichte Phase mit einer Base neutralisiert wird, bevor das restliche überschüssige Methanol gewonnen wird.

## Revendications

1. Méthode à haut rendement pour la production d'esters d'alkyle à partir d'acides gras par catalyse acide, **caractérisée par le fait que** l'estérification et la trans-estérification sont produites simultanément dans un processus continu et **par le fait qu'**elle est produite au cours d'une seule étape dans un réacteur tubulaire isotherme (5), de préférence en position verticale, avec du méthanol liquide et de 50 % de matières grasses à 100 % d'acides gras libres ayant moins de 1 % d'humidité, un temps de séjour compris entre 15 et 120 minutes, de préférence entre 15 et 70 minutes, et un excès molaire de méthanol/ matières grasses supérieur au rapport stoechiométrique de 12-18 : 1, de préférence 12-15:1 et en ce que la température d'entrée du premier réacteur (5) est comprise entre 90 °C et 132 °C.

2. Méthode de production d'esters d'alkyle à partir d'acides gras par catalyse acide, **caractérisée par le fait que** l'estérification et la trans-estérification sont réalisées simultanément et **par le fait qu'**elle est réalisée en deux étapes, chacune dans un réacteur tubulaire isotherme (5), de préférence en position verticale, avec du méthanol liquide et une teneur en matières grasses de 50 % à 100 % d'acides gras libres et moins de 1 % d'humidité ; temps de séjour compris entre 15 et 120 minutes, de préférence entre 15 et 70 minutes, et avec un excès molaire de méthanol/graisse supérieur au rapport stoechiométrique de 4-6 : 1 dans la première étape, et de 30-80 : 1, de préférence de 30-40 : 1, dans la deuxième étape et que la température d'entrée des deux étapes est comprise entre 90 °C et 132 °C.

3. Méthode selon la revendication 1 ou 2, **caractérisée par le fait que** la température d'entrée du premier réacteur (5) est d'environ 125 °C.

4. Méthode selon la revendication 1 ou 2, **caractérisée par le fait que** les graisses sont choisies parmi les huiles végétales brutes ou les acides gras libres provenant du raffinage du pétrole ou des matières premières huileuses de très faible qualité et **par le fait que** les graisses peuvent avoir de 50 % à 100 % d'acides gras libres.

5. Procédé selon la revendication 1, **caractérisé en ce que** son catalyseur est homogène, et présent dans un pourcentage en poids compris entre 1 % et 5 % en poids par rapport à la matière grasse.

6. Procédé selon la revendication 1 ou 2, **caractérisé en ce que** le pourcentage en poids du catalyseur homogène est de 1 % à 2 % en poids par rapport à la matière grasse dans la première étape et de 1 % à 7 % dans la deuxième étape, de préférence entre 1 % et 5 %.

7. Procédé selon la revendication 1 ou 2, **caractérisé par le fait qu'**il comprend un catalyseur hétérogène, à caractère acide, avec une base oxyde mixte non réductible dérivée de l'acide sulfonique, pour catalyser à la fois l'estérification et la trans-estérification.

8. Méthode selon la revendication 1 ou 2, **caractérisée par le fait qu'**une récupération préalable du méthanol est produite dans une phase de décompression des produits de sortie du réacteur (5).

9. Procédé selon la revendication 8, **caractérisé en ce que** le produit de la réaction est séparé en une phase légère avec l'eau, la glycérine et le méthanol en excès et une phase lourde, et où la phase légère subit une récupération partielle du méthanol jusqu'à l'obtention d'une concentration entre 33%-50% en poids, de préférence entre 33%-45%, qui insolubilise la graisse dissoute, et la graisse dissoute est séparée par décantation ou séparation par centrifugation.

10. Procédé selon la revendication 8, **caractérisé par le fait qu'**il s'agit d'un catalyseur homogène dans lequel, après la récupération partielle du méthanol, la phase légère est neutralisée avec une base avant la récupération du reste du méthanol en excès.
